# EUROPÄISCHE PATENTSCHRIFT

(11) **EP 3 041 363 B1**
(45) Veröffentlichungstag und Bekanntmachung des Hinweises auf die Patenterteilung: **02.05.2018**
(21) Anmeldenummer: 14742497.2
(22) Anmeldetag: 21.07.2014
(51) Int. Cl.: A23G 3/20, A23G 3/34, A23G 3/22

(54) **SYSTEM UND VERFAHREN ZUM ÜBERZIEHEN VON PRODUKTEN**
SYSTEM AND METHOD FOR COATING OF PRODUCTS
SYSTÈME ET PROCÉDÉ POUR L'ENROBAGE DES PRODUITS

(30) Priorität: 04.09.2013 DE 102013014716
(43) Veröffentlichungstag der Anmeldung: 13.07.2016
(73) Patentinhaber: Hosokawa Bepex GmbH, 74211 Leingarten (DE)
(72) Erfinder: HILTSCHER, Markus, 22339 Hamburg (DE); SCHIERITZ, H. Peter, 20257 Hamburg (DE); GROETSCH, Heiko, 20251 Hamburg (DE); GEHRKE, Ulrich, 79664 Wehr (DE)
(74) Vertreter: Thum, Bernhard
(86) Internationale Anmeldenummer: PCT/EP2014/065642
(87) Internationale Veröffentlichungsnummer: WO 2015/032539

(56) Entgegenhaltungen:
- EP-A1- 2 100 515
- DE-A1- 3 710 539
- DE-A1-102006 054 570
- DE-A1-102011 008 148
- DE-C1- 4 209 966
- DE-U1-202013 000 738

## Beschreibung

Die vorliegende Erfindung betrifft ein System zum Überziehen von Produkten, insbesondere Lebensmittelprodukten, mit unterschiedlichen fließfähigen Überzugsmassen.

Aus dem Stand der Technik sind Überziehvorrichtungen, sogenannte Überziehmaschinen, bekannt. Derartige Überziehmaschinen werden beispielsweise eingesetzt, um eine in einzelne Riegel geformte Lebensmittelmasse mit einer Überzugsmasse, wie z.B. Schokolade, zu überziehen, um beispielsweise Kekse, Müsliriegel oder Schokoriegel herzustellen.

In der Praxis hat sich gezeigt, dass ein Wechsel der Überzugsmasse, d.h. beispielsweise ein Wechsel von dunkler Schokolade auf weiße Schokolade, nur unter relativ großem Aufwand, vor allen Dingen nur mit einem relativ großen Zeitaufwand möglich ist. Bei einem Wechsel der Überzugsmasse ist unter allen Umständen zu vermeiden, dass die zu verwendende Überzugsmasse mit der vorher verwendeten Überzugsmasse verunreinigt wird. Bei verunreinigten Überzugsmassen können die hergestellten Produkte bzw. Lebensmittelprodukte aufgrund der mangelnden Qualität möglicherweise nicht verwendet werden.

Der Zeitaufwand für einen Wechsel der Überzugsmasse bei herkömmlichen Überziehmaschinen beträgt derzeit sechs Stunden oder auch mehr, wobei in dieser Zeit die Überziehvorrichtungen nicht verwendet werden können. Da in der Zeit des Wechsels der Überzugsmassen die Produktion stillsteht, ist der Wechsel der Überzugsmassen gleichbedeutend mit einem monetären Verlust für die Produzenten der zu überziehenden Produkte.

Derzeit wird zum Wechsel der Überzugsmasse entweder die Überziehmaschine komplett entleert und gereinigt oder es wird eine fahrbare Massewanne oder ein fahrbarer Massetrog, gefüllt mit einer Überzugsmasse, in eine Warteposition gefahren. Die Überzugsmasse kann dabei mittels einer Temperiereinrichtung an der Massewanne temperiert gehalten werden.

Anschließend wird eine Reinigungswanne mit Reinigungsflüssigkeit, z.B. Wasser, an der Überziehvorrichtung angebracht. Die Überziehvorrichtung und insbesondere ihre mit der Überzugsmasse in Kontakt kommenden Teile werden eingehend gereinigt und von Resten der ausgewechselten Überzugsmasse befreit.

Im Anschluss daran wird eine zweite Massewanne mit vortemperierter Überzugsmasse zur Überziehvorrichtung verlagert und die Maschine erneut in Betrieb genommen.

Dieses Verfahren zum Wechseln der Überzugsmasse hat Nachteile dahingehend, dass die Reinigung der relativ komplexen Überziehvorrichtungen sehr aufwändig ist und die Überziehvorrichtungen anschließend auch noch getrocknet werden müssen. Zudem besteht hier die Gefahr, dass die Überziehvorrichtung durch in der Maschine verbliebene Reste der Reinigungsflüssigkeit und auch durch den Trocknungsvorgang mit Keimen kontaminiert wird. Eine Kontamination der zu verwendenden Überzugsmasse bzw. der Produkte ist unter allen Umständen zu vermeiden.

Ferner kann es beim Verfahren der Massewannen mit der Überzugsmasse dazu kommen, dass die Überzugsmasse durch die Bewegung aus den Massewannen schwappt, so dass Überzugsmasse verloren geht.

EP 2 100 515 A1 offenbart eine Überziehmaschine, die eine Zuführgruppe zum Zuführen der Überzugsmasse, eine Fördergruppe und ein stationäres Auffangbecken aufweist, das unterhalb der Fördergruppe angeordnet ist. Das Auffangbecken kann überschüssige Überziehmasse auffangen, die von der Fördergruppe tropft. Die Zuführgruppe und die Fördergruppe der Überziehmaschine sind abnehmbar. Die Zuführgruppe und die Fördergruppe können durch eine Zuführgruppe und eine Fördergruppe ausgetauscht werden, die mit einer zweiten Überziehmasse verwendet werden können.

DE 10 2006 054570 A1 offenbart eine Überzieheinrichtung mit einem Hauptgestell, einem Gittersystem und einer Temperiereinrichtung. Das Hauptgestell besteht aus einem Untergestell, welches die Überziehstation, einen Antriebsmotor, die Schaltanlage und die Versorgungsleitungen aufnimmt. Die Versorgungsleitung, die Überziehstation mit Überziehungsmasse versorgt, ist an dem Gittersystem angeordnet. Die Überziehstation wird im zusammengeschobenen Zustand aller drei Bausteine durch das dann mittig über der Überziehstation befindliche Versorgungsrohr mit der in der Temperierstation erwärmten Überzugsmasse versorgt.

Es besteht demnach ein Bedarf an Lösungen, die einen schnellen Wechsel der Überzugsmassen möglich machen und die weiteren Nachteile des Stands der Technik ausräumen.

Es ist eine Aufgabe der vorliegenden Erfindung, ein System und ein Verfahren bereitzustellen, die einen schnellen Wechsel der Überzugsmasse zulassen und die Nachteile des Stands der Technik ausräumen. Diese Aufgabe wird mit einem System zum Überziehen von Produkten, insbesondere Lebensmittelprodukten, mit unterschiedlichen fließfähigen Überzugsmassen mit den Merkmalen des Patentanspruchs 1 gelöst.

Weitere Ausführungsformen der Erfindung sind in den beigefügten abhängigen Ansprüchen angegeben.

Das System zum Überziehen von Produkten mit unterschiedlichen fließfähigen Überzugsmassen gemäß der Erfindung umfasst wenigstens eine erste Überziehvorrichtung mit einem Aufnahmemittel zur Aufnahme einer ersten Überzugsmasse und wenigstens eine zweite Überziehvorrichtung mit einem Aufnahmemittel zur Aufnahme einer zweiten Überzugsmasse und eine Dachanordnung, die eine Produktionsposition definiert.

Die wenigstens eine erste Überziehvorrichtung und die wenigstens eine zweite Überziehvorrichtung sind der Dachanordnung zugeordnet. Die wenigstens eine erste Überziehvorrichtung und die wenigstens eine zweite Überziehvorrichtung sind wechselweise in die Produktionsposition verlagerbar und in der Produktionsposition jeweils mit der Dachanordnung koppelbar.

Eine der ersten oder zweiten Überziehvorrichtung, die mit der in der Folge zu verwendenden Überzugsmasse gefüllt ist, wird in die Produktionsposition verlagert, die von der Dachanordnung definiert wird, und in der Produktionsposition mit der Dachanordnung gekoppelt.

Gemäß der Erfindung sind mindestens zwei verlagerbare Überziehvorrichtungen vorgesehen, die einer eine Produktionsposition definierenden Dachanordnung zugeordnet sind. In der Produktionsposition kann die sich in der Produktionsposition befindende Überziehvorrichtung mit der Dachanordnung zum Überziehen der Produkte, wie z.B. Kekse, Müsliriegel oder Schokoriegel, zusammenwirken.

Gemäß der Erfindung werden demnach bei einem Wechsel der Überzugsmasse die Überziehvorrichtungen vollständig ausgewechselt, so dass eine Reinigung der Überziehvorrichtungen nicht notwendig ist, was den Zeitaufwand für den Wechsel der Überzugsmassen erheblich verringert.

Ferner ist es auch nicht mehr notwendig, einzelne mit der Überzugsmasse gefüllte Massewannen zu verfahren, wodurch es auch zu keinen Verlusten der Überzugsmasse kommen kann.

Da bei dem erfindungsgemäßen System keine Reinigung der Überziehvorrichtung mit Reinigungsflüssigkeit und zudem auch keine Trocknung mehr notwendig ist, besteht auch keine Gefahr, dass die Produkte mit der Reinigungsflüssigkeit oder der zuvor benutzten Überzugsmasse kontaminiert werden.

Mit dem System gemäß der Erfindung kann ein Wechsel der Überzugsmasse in weniger als einer Stunde erfolgen. Dies ist gleichbedeutend mit zumindest einer Zeitersparnis von fünf Stunden verglichen mit dem Stand der Technik.

Gemäß einer Ausführungsform der Erfindung kann die wenigstens eine erste Überziehvorrichtung und die wenigstens eine zweite Überziehvorrichtung zwischen der Produktionsposition und wenigstens einer Parkposition verlagerbar sein. Es kann demnach eine vordefinierte Parkposition vorgesehen sein, in die die nicht verwendete Überziehvorrichtung bzw. die sich nicht in der Produktionsposition befindende Überziehvorrichtung verlagert werden kann. Um eine Verlagerung der Überziehvorrichtungen zuzulassen, können die erste und die zweite Überziehvorrichtung Räder aufweisen. Es ist jedoch auch denkbar, die Überziehvorrichtungen über ein Schienensystem zwischen der Produktionsposition und der Parkposition zu verlagern. Auch bei einem Schienensystem können die Überziehvorrichtungen Räder aufweisen, die mit dem Schienensystem zusammenwirken. In diesem Zusammenhang kann der ersten Überziehvorrichtung und der zweiten Überziehvorrichtung jeweils wenigstens eine Parkposition zugeordnet sein. Bei einem Wechsel der Überzugsmasse wird dann die eine Überziehvorrichtung von der Produktionsposition in die ihr zugeordnete Parkposition verlagert, und die jeweils andere Überziehvorrichtung wird aus der ihr zugeordneten Parkposition in die Produktionsposition verlagert.

Die wenigstens eine erste Überziehvorrichtung und die wenigstens eine zweite Überziehvorrichtung können in der Produktionsposition unterhalb der Dachanordnung angeordnet sein. Die Dachanordnung kann ortsfest angeordnet sein und sich über eine Stützeinrichtung an einem Untergrund abstützen, oder an der Decke angebracht sein. Anders ausgedrückt, kann die Dachanordnung fest in einem Produktionsraum installiert sein, wobei die erste Überziehvorrichtung und die zweite Überziehvorrichtung relativ zu der Dachanordnung verlagerbar sein können. Die Stützeinrichtung kann beispielsweise von vier Säulen gebildet werden. Die in die Produktionsposition zu verlagernde Überziehvorrichtung kann durch die Stützeinrichtung hindurch unter die Dachanordnung in die Produktionsposition verlagert und dort mit der Dachanordnung gekoppelt werden. Die Stützeinrichtung der Dachanordnung kann freitragend sein. Die Dachanordnung kann derart ausgebildet sein, dass sie weniger kontaminationsempfindlich und leichter zu reinigen ist. Die Stützeinrichtung der Dachanordnung kann aus Edelstahl hergestellt und dicht verschweißt sein.

Gemäß einer Ausführungsform der Erfindung kann das System eine Parkeinrichtung zur Aufnahme der sich nicht in der Produktionsposition befindenden wenigstens einen ersten Überziehvorrichtung oder wenigstens einen zweiten Überziehvorrichtung umfassen. Die Parkeinrichtung kann dabei die wenigstens eine Parkposition definieren. Die wenigstens eine erste Überziehvorrichtung oder die wenigstens eine zweite Überziehvorrichtung kann in der Parkeinrichtung beheizbar sein. Ferner ist es möglich, dass die Parkeinrichtung selbst beheizt werden kann. In der Parkeinrichtung können verschiedene Anschlussmittel vorgesehen sein, die beispielsweise der Beheizung oder als Stromanschluss dienen.

Die Parkeinrichtung kann eine Abdeckung für die sich in der Parkposition befindende wenigstens eine erste Überziehvorrichtung oder wenigstens eine zweite Überziehvorrichtung aufweisen. Die Abdeckung dient zum einen als Wärmedämmung, um die sich in der Parkeinrichtung befindende Überziehvorrichtung auf einer vorbestimmten Temperatur zu halten, so dass sie bei einem Wechsel der Überzugsmasse sofort einsatzfähig ist. Ferner kann durch die Abdeckung eine Kontaminierung der Überziehvorrichtung in der Parkposition verhindert werden.

Die Dachanordnung kann eine Gebläsestation und/oder eine Steuerung aufweisen. Die wenigstens eine erste Überziehvorrichtung und die wenigstens eine zweite Überziehvorrichtung weisen jeweils ein Förderband auf. Das Förderband kann ein angetriebenes gitterartiges endloses Förderband sein, auf dem die Produkte angeordnet und von einem Einlaufende zu einem Auslaufende der Überziehvorrichtung gefördert werden können. Die Gebläsestation der Dachanordnung kann auf das Förderband der sich in der Produktionsposition befindenden wenigstens einen ersten Überziehvorrichtung oder wenigstens einen zweiten Überziehvorrichtung gerichtet sein. Die Steuerung kann zur Steuerung sämtlicher Komponenten der ersten oder zweiten Überziehvorrichtung in der Produktionsposition auch der in der Dachanordnung befindlichen Komponenten, d.h. auch zur Steuerung der Gebläsestation der Dachanordnung, dienen.

Die wenigstens eine erste Überziehvorrichtung und die wenigstens eine zweite Überziehvorrichtung können jeweils wenigstens eine Heizeinrichtung aufweisen. Die Anordnung der Heizeinrichtung in den Überziehvorrichtungen kann anschlusstechnisch vorteilhaft sein, da bei der Kopplung der in der Produktionsposition angeordneten Überziehvorrichtung weniger Kupplungen (Schnellkupplungen) bzw. Leitungen mit der Dachanordnung gekoppelt werden müssen.

Das Aufnahmemittel zur Aufnahme der Überzugsmasse der wenigstens einen ersten Überziehvorrichtung und der wenigstens einen zweiten Überziehvorrichtung ist eine beheizbare Massewanne. Die Massewanne kann über ein Leitungssystem mit einer Überziehstation der wenigstens einen ersten Überziehvorrichtung oder der wenigstens einen zweiten Überziehvorrichtung verbunden sein. Über das Leitungssystem kann die Überziehstation einer der Überziehvorrichtungen mit Überzugsmasse aus der Massewanne versorgt werden.

Das System kann wenigstens ein Positionierungsmittel aufweisen, das eine exakte Positionierung der ersten Überziehvorrichtung oder der zweiten Überziehvorrichtung in der Produktionsposition sicherstellt. Die Positionierungsmittel können beispielsweise in einen Untergrund oder Boden eingelassen sein. Ferner ist es denkbar, dass die erste Überziehvorrichtung oder die zweite Überziehvorrichtung ein verlagerbares Positionierungsmittel aufweisen, das mit einem Positionierungsmittel an der Produktionsposition zusammenwirkt und die exakte Positionierung der Überziehvorrichtung sicherstellt.

Die voranstehende Aufgabe wird auch durch ein Verfahren mit den in dem Patentanspruch 13 angegebenen Schritten gelöst.

Das Verfahren zum Überziehen von Produkten, insbesondere Lebensmittelprodukten, mit unterschiedlichen fließfähigen Überzugsmassen umfasst die Schritte von:
- Bereitstellen einer ersten Überziehvorrichtung mit einem Aufnahmemittel zur Aufnahme einer ersten Überzugsmasse,
- Bereitstellen einer zweiten Überziehvorrichtung mit einem Aufnahmemittel zur Aufnahme einer zweiten Überzugsmasse,
- wechselweises Verlagern der ersten Überziehvorrichtung oder der zweiten Überziehvorrichtung in eine Produktionsposition,
- Koppeln der sich in der Produktionsposition befindenden ersten Überziehvorrichtung oder zweiten Überziehvorrichtung mit einer Dachanordnung.

Wie bereits erwähnt, können die erste Überziehvorrichtung und die zweite Überziehvorrichtung wechselweise in die Produktionsposition verlagert und dort mit der Dachanordnung gekoppelt werden. In diesem Zustand ist dann eine Produktion möglich, d.h. es können Lebensmittelprodukte mit einer Überzugsmasse versehen werden. Soll die Überzugsmasse gewechselt werden, wird die jeweils andere Überziehvorrichtung in die Produktionsposition verlagert.

Der Schritt von wechselweisem Verlagern der ersten Überziehvorrichtung und der zweiten Überziehvorrichtung kann ferner die folgenden Schritte umfassen:
- Verlagern der ersten oder der zweiten Überziehvorrichtung aus einer Parkposition in die Produktionsposition,
- Verlagern der ersten oder der zweiten Überziehvorrichtung aus der Produktionsposition in die Parkposition, und
- Verlagern der jeweils anderen ersten oder zweiten Überziehvorrichtung von der Parkposition in die Produktionsposition.

Mit anderen Worten kann bei einem Wechsel der Überzugsmasse die sich in der Produktionsposition befindende Überziehvorrichtung in ihre Parkposition verlagert und die jeweils andere Überziehvorrichtung von ihrer Parkposition in die Produktionsposition verlagert werden. Befindet sich die Überziehvorrichtung mit der nun zu verwendenden Überzugsmasse in der Produktionsposition, kann unmittelbar mit der Produktion begonnen werden.

Das Verfahren kann ferner den Schritt umfassen von:
- Koppeln der sich in der Parkposition befindenden ersten oder zweiten Überziehvorrichtung mit einer Parkeinrichtung.

Die Parkeinrichtung kann Anschlussmittel für die Beheizung der sich in ihr befindenden Überziehvorrichtung und/oder Stromanschlüsse umfassen. Ferner wird die Überziehvorrichtung in der Parkposition abgedeckt.

Die Erfindung wird im Folgenden beispielhaft anhand der beiliegenden Figuren erläutert. Es stellen dar:
- Fig. 1: eine räumliche Übersichtsansicht eines ersten Ausführungsbeispiels des erfindungsgemäßen Systems mit einer Dachanordnung und einer Überziehvorrichtung in der Produktionsposition;
- Fig. 2: eine räumliche Ansicht der Überziehvorrichtung gemäß dem ersten Ausführungsbeispiel der erfindungsgemäßen Systems, betrachtet von der Nutzerseite;
- Fig. 3: eine räumliche Ansicht der in Figur 2 gezeigten Überziehvorrichtung, betrachtet von der Versorgungsseite;
- Fig. 4: eine räumliche Ansicht der Dachanordnung gemäß dem ersten Ausführungsbeispiel des erfindungsgemäßen Systems;
- Fig. 5: eine räumliche Ansicht des Band-Aufgabetisches einer Überziehvorrichtung gemäß dem ersten Ausführungsbeispiel des erfindungsgemäßen Systems;
- Fig. 6: eine räumliche Ansicht eines Komponentenschranks; und
- Fig. 7: eine räumliche Ansicht der Bodenüberziehstation, wie sie bei der Überziehvorrichtung des erfindungsgemäßen Systems Anwendung findet;
- Fig. 8: eine Vorderansicht eines zweiten Ausführungsbeispiels eines erfindungsgemäßen Systems mit einer Überziehvorrichtung in der Produktionsposition;
- Fig. 9: eine Vorderansicht des zweiten Ausführungsbeispiels des erfindungsgemäßen Systems mit einer Überziehvorrichtung in der Parkposition;
- Fig. 10: eine Vorderansicht des zweiten Ausführungsbeispiels eines erfindungsgemäßen Systems mit einer Überziehvorrichtung in der Parkposition;
- Fig. 11: eine Draufsicht des zweiten Ausführungsbeispiels des erfindungsgemäßen Systems mit einer Überziehvorrichtung in der Parkposition;
- Fig. 12: eine Draufsicht des zweiten Ausführungsbeispiels des erfindungsgemäßen Systems mit zwei Überziehvorrichtungen in ihrer jeweiligen Parkposition; und
- Fig. 13: eine Vorderansicht einer Parkeinrichtung mit darin aufgenommener Überziehvorrichtung.

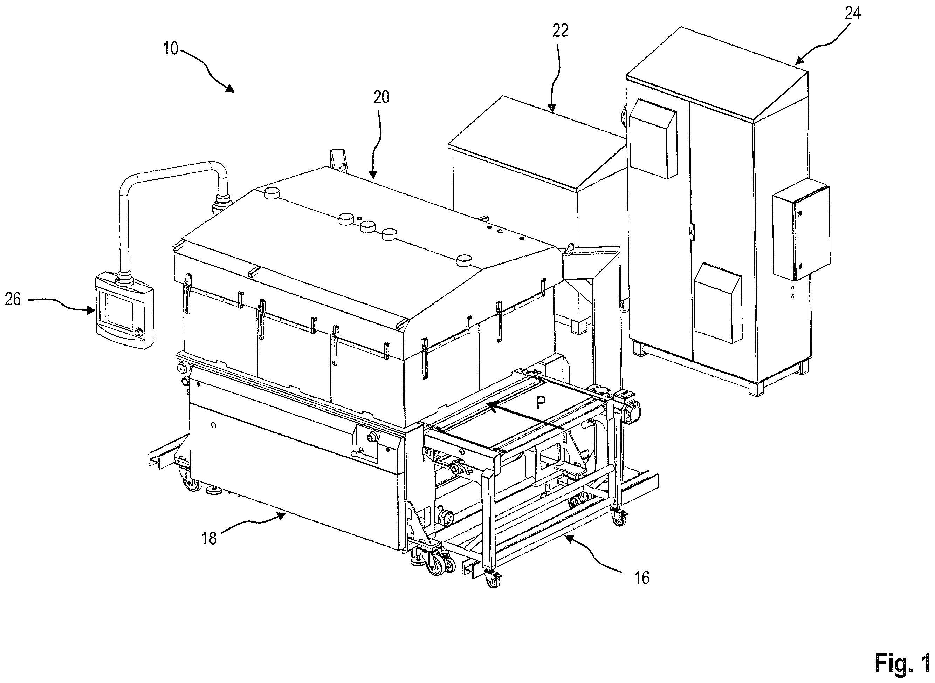

In Figur 1 zeigt eine perspektivische Ansicht eines Systems 10 gemäß einem ersten Ausführungsbeispiel der Erfindung.

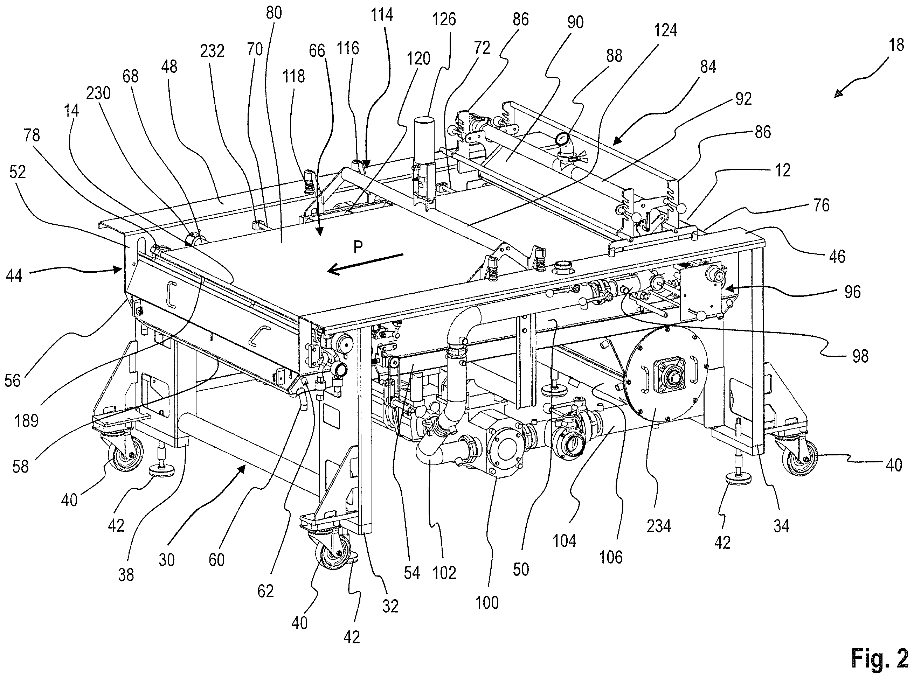

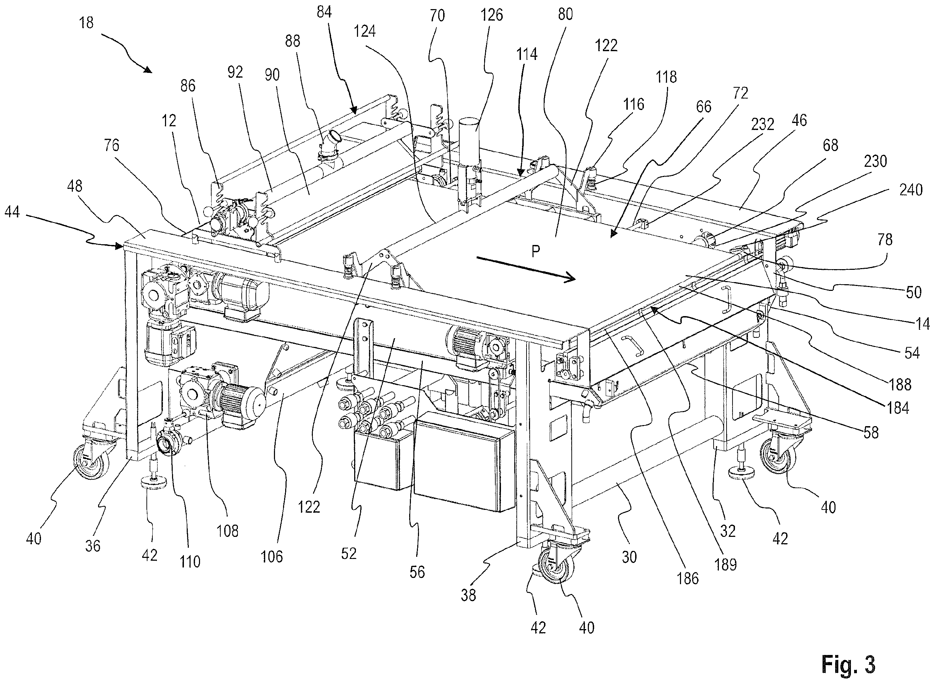

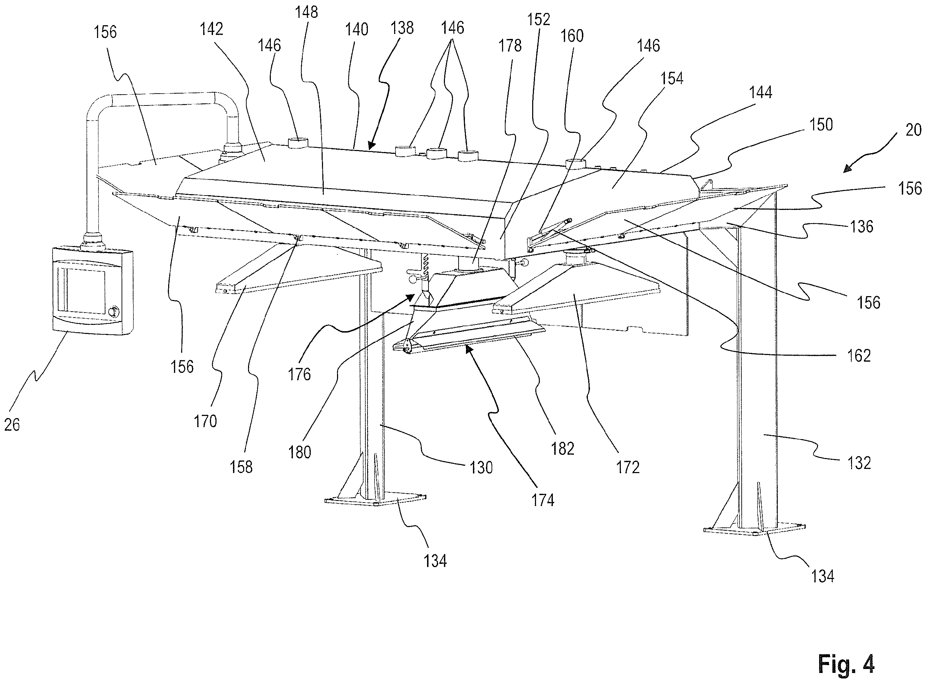

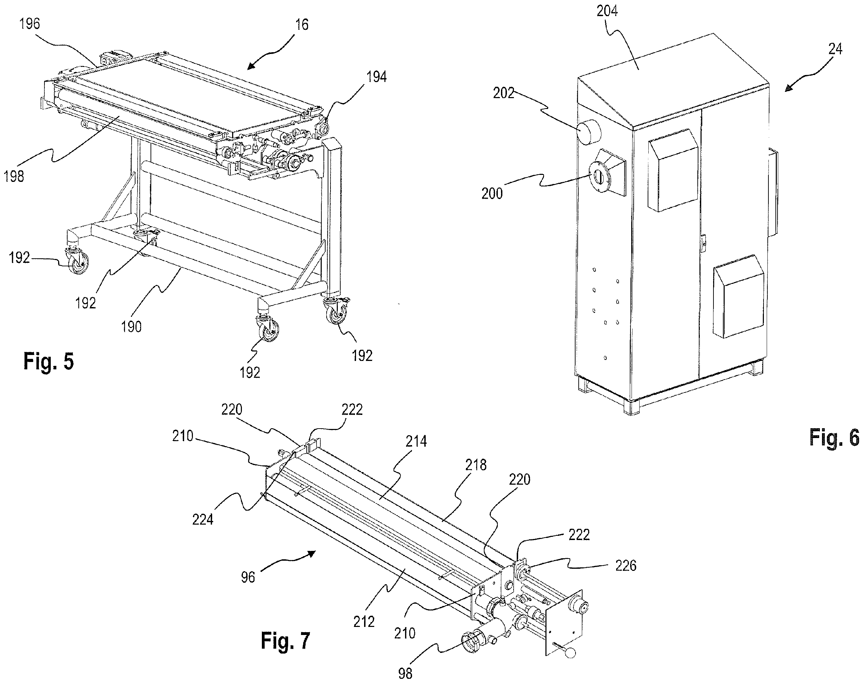

Das System 10 umfasst eine Dachanordnung 20 und eine erste und eine zweite Überziehvorrichtung 18, wobei in Figur 1 nur die sich in der Produktionsposition PP befindende Überziehvorrichtung 18 dargestellt ist. Die Überziehvorrichtung 18 umfasst ein Einlaufende 12 und ein Auslaufende 14 und wird in Richtung von Pfeil P mit Produkten beschickt. Im Bereich des Einlaufendes 12 ist ein so genannter Band-Aufgabetisch 16 vorgesehen, der im Folgenden mit Bezug auf Figur 5 im Detail beschrieben werden wird. Die Überziehvorrichtung 18 wird im Folgenden mit Bezug auf Figuren 2 und 3 im Detail beschrieben wird. Die Überziehvorrichtung 18 ist unter einer Dachangeordnet 20 angeordnet. Die Dachanordnung 20 definiert die Produktionsposition PP, die sich unterhalb der Dachanordnung 20 befindet. Auf die Dachanordnung 20 wird im Folgenden mit Bezug auf Figur 4 eingegangen.

Das System 10 weist die beiden in Figur 1 gezeigten Komponentenversorgungsschränke 22 und 24 auf, die zur Warmwasserversorgung, zur Warmluftversorgung und zur Stromversorgung der erfindungsgemäßen Vorrichtung ausgebildet sind. Schließlich erkennt man in Figur 1 noch eine Bedieneinheit bzw. Steuerung 26 mit einer Benutzeroberfläche, über die das erfindungsgemäße System 10 gesteuert werden kann.

Im Folgenden soll mit Bezug auf die Figuren 2, 3 und 7 auf die Überziehvorrichtung 18 des erfindungsgemäßen Systems 10 eingegangen werden. Die Überziehvorrichtung 18 weist ein Gestell 30 auf, das aus Edelstahl hergestellt und dicht verschweißt ist. Der Begriff "dicht verschweißt" bedeutet, dass keine von außen zugänglichen Hohlräume oder Hinterschneidungen existieren, in die Schmutz oder im Betrieb Überzugmasse eintreten können und die mangels Zugänglichkeit nicht hinreichend gereinigt werden können. Das Gestell 30 weist insgesamt vier Stützbeine 32, 34, 36, 38 auf, an denen Rollen 40 angebracht sind, um die Überziehvorrichtung 18 verlagern zu können. In der Produktionsposition PP lässt sich die Überziehvorrichtung 18 über in ihrer Höhe einstellbare Lagerfüße 42 stabilisieren. Auf den Stützbeinen 32, 34, 36, 38 ist ein wannenartiges Gehäuse 44 aus Edelstahl angeordnet. Dieses weist entlang seiner Längsseiten etwa horizontal abgewinkelte Randstreifen 46, 48 auf, die über vertikale Wandabschnitte 50, 52 und aufeinander zu laufende Schrägen 54, 56 in einen Bodenabschnitt 58 übergehen. Das Gehäuse 44 ist zumindest im Bereich des Bodenabschnitts 58 und im Bereich der Schrägen 54,56 doppelwandig mit einem Hohlraum ausgebildet und kann über einen Anschlussstutzen 60 und einen zugehörigen Ablaufstutzen 62 mit Warmwasser versorgt werden. Dies macht es möglich, das Gehäuse 44 in dem Bereich, auf den Überzugmasse tropft, auf hinreichend hoher Temperatur zu halten, um zu vermeiden, dass die Überzugmasse ihre Fließfähigkeit verliert und erstarrt.

Die Überziehvorrichtung 18 weist ferner ein oberhalb des Bodenabschnitt 58 zwischen den beiden Wandabschnitten 50, 52 angeordnetes gitterartiges Förderband 66 auf. Dieses ist geschlossen, das heißt endlos, und als Metallgeflecht ausgeführt. Das Förderband 66 ist über eine Antriebswalze und Stützwalzen 68 bzw. Stützstreben 70, 72 sowie im Bereich des Einlaufendes 12 und des Auslaufendes 14 über jeweils eine schräg gestellte Umlenkleiste 76, 78 geführt. Die Umlenkleisten 76, 78 sind jeweils mit einer Kunstoffleiste aus einem geeigneten verschleißarmen Kunststoff ausgeführt, die auf einen Edelstahlträger aufgesteckt ist, der wiederum am Gehäuse in unten beschriebener Weise angebracht ist. Das Förderband 66 weist ein nach oben exponiertes Trum 80 auf, auf dem im Überziehbetrieb die zu überziehenden Produkte aufliegen und in Richtung des Pfeils P gefördert werden, wobei sie mit Überzugmasse überzogen werden. Das Förderband 66 läuft unterhalb dieses exponierten oberen Trums 80 entgegen dem Pfeil P zurück, wobei es nahe dem Bodenabschnitt 58 des Gehäuses 44 verläuft und dabei abgetropfte Überzugmasse zurück fördert.

Hinter dem Einlaufende 12 ist in Förderrichtung P eine Schleierüberziehstation 84 vorgesehen, die oberhalb des exponierten oberen Trums 80 angeordnet und über Raststreben 86 in ihrer Höhe relativ zu dem Förderband 66 verstellbar ist. Die Schleierüberziehstation 84 ist über einen Versorgungstutzen 88 mit flüssiger Überzugmasse versorgbar. Sie weist ein dachförmiges Schleierblech 90 aus Edelstahl auf, auf das über ein Verteilerrohr 92 zugeführte Überzugmasse im Wesentlichen gleichmäßig verteilt wird und von diesem gleichmäßig nach unten strömt. Dadurch wird ein gleichmäßiger geschlossener Schleier aus Überzugmasse gebildet, durch den das Förderband 66 mit seinen darauf liegenden, zu überziehenden Produkten bei einer Bewegung entlang dem Pfeil P geführt wird.

Unterhalb der Schleierüberziehstation 84 ist eine Bodenüberziehstation 96 vorgesehen, die dazu ausgebildet ist, die auf dem Förderband 66 liegenden Produkte bodenseitig mit Überzugmasse zu versehen. Auch diese wird über einen Anschlussstutzen 98 mit Überzugmasse versorgt.

Zur Versorgung mit Überzugmasse ist unterhalb des Bodenabschnitts 58 des Gehäuses 44 eine Massepumpe 100 vorgesehen, die druckseitig in nicht gezeigter Weise mit der Schleierüberziehstation 84 und über die Verbindungrohre 102 mit der Bodenüberziehstation 96 verbunden ist. Saugseitig ist die Massepumpe 100 über ein Verbindungsrohr 104 mit einem ebenfalls doppelwandig aus Edelstahl ausgebildeten und beheizbaren Massetrog 106 mit einem darin angeordneten Rührwerk (nicht gezeigt) gekoppelt, in dem sich Überzugmasse sammelt, erwärmt wird und über das Rührwerk umgewälzt wird. Das im Inneren des Massetrogs 106 angeordnete Rührwerk wird über eine Antriebsmotor 108 drehangetrieben. Dieser Massetrog 106 ist zusätzlich über einen Anschlussstutzen 110 mit flüssiger Überzugmasse befüllbar.

Etwa in der Mitte der Überziehvorrichtung 18 ist an dem oberen Trum 80 des Förderbandes 66 eine Rüttelstation 114 vorgesehen. Diese stützt sich über freitragende Halter 116 und darunter liegende Federn 118 beidseits an den Randstreifen 46,48 des Gehäuses 44 ab, wobei die Federn über Haltezapfen an den Randstreifen 46,48 gehalten werden. Unterhalb des oberen Trums 80 des Förderbandes 66 verlaufen drei Rüttelstreben 120, die endseitig über zwei die Halter 116 tragenden Verbindungsgabeln 122 mit einem oberhalb des Förderbandes 66 angeordneten Rohr 124 verbunden sind. An diesem Rohr 124 ist ein Rüttelmotor 126 angeordnet, der für eine Rüttelbewegung der das Förderband 66 unterstützenden drei Rüttelstreben 120 sorgt.

Wie man in der Übersichtsdarstellung gemäß Figur 1 erkennt, befindet sich die Überziehvorrichtung 18 in der Produktionsposition PP unterhalb der Dachanordnung 20. Die Dachanordnung 20 ist separat in räumlicher Darstellung in Figur 4 gezeigt. Diese stützt sich über zwei Säulen 130, 132 mit Fußplatten 134 an einem Untergrund ab und ist an diesem in einem montierten Zustand über Bolzen fixiert. Am oberen Ende der beiden Säulen 130, 132 ist jeweils ein im Wesentlichen horizontal verlaufender Tragarm 136 angeordnet, der ein Dach 138 trägt. Dieses Dach 138 ist als Spitzdach mit einem Scheitel 140 und zwei zueinander geneigten Dachhälften 142, 144 ausgebildet. Im Bereich des Scheitels 140 sind Anschlussstutzen 146 für Versorgungsleitungen vorgesehen. An die beiden Dachhälften 142, 144 schließt sich über einen hierzu geneigten Übergangsbereich 148, 150 jeweils ein im Wesentlichen vertikal verlaufender seitlicher Wandabschnitt 152 an. Stirnseitig ist auf beiden Seiten jeweils ein Stirnwandabschnitt 154 vorgesehen. Das gesamte Dach 138 ist aus Edelstahl ausgeführt und unter Vermeidung von kontaminationsanfälligen sowie schwer zu reinigenden Fügekanten und Hohlräumen dicht verschweißt.

An den Wandabschnitten 152 und 154 sind jeweils eine Mehrzahl von klappbaren Abdeckfenstern 156 vorgesehen, die über Scharniere 158 und Gasdruckfedern 160 sowie eine mit den Gasdruckfedern 160 gekoppelte Hebelkonstruktion 162 gelenkig an den Wandabschnitten 152 und 154 angebracht sind. Dadurch ist es möglich, die Abdeckfenster 156 einzeln stufenlos nach oben zu klappen, wie in Figur 4 gezeigt, um Zugang zu dem Bereich unterhalb des Daches 138 zu bekommen, oder die Abdeckfenster 156 nach unten zu klappen, wie in Figur 1 gezeigt, um den Bereich, in dem der Überziehvorgang stattfindet, gegenüber der Umgebung weitgehend dicht abzuschirmen. Wichtig dabei ist, dass die Scharniere 158, die Gasdruckfedern 160 sowie der Hebelkonstruktion 162 außerhalb dieses Bereichs unterhalb des Daches 138, in dem der Überziehvorgang stattfindet, angeordnet sind und somit diese kontaminationsanfälligen sowie schwer zu reinigenden Bauteile nicht mit der Überzugmasse in Kontakt kommen.

Ferner erkennt man in Figur 4, dass von dem Dach 138 in dem Bereich, in dem der Überziehvorgang stattfindet, nahe den Enden jeweils ein Gebläsekasten 170, 172 herabhängend vorgesehen ist, der von außen über einen der Anschlussstutzen 146 mit Warmluft versorgt werden kann. Die Gebläsekästen 170, 172 sind in Edelstahl ausgeführt und sorgen für einen Warmluftschleier, der auf die auf dem Gitterband 66 liegenden Produkte appliziert werden kann. Zwischen den beiden Gebläsekästen 170, 172 ist eine Gebläsestation 174 vorgesehen. Diese ist über eine Rasthalterung 176 höhenverstellbar in hängender Weise an dem Dach 138 angeordnet und wird über ein Versorgungsrohr 178 mit Warmluft versorgt. Die Gebläsestation 174 weist einen aus Edelstahl ausgebildeten Gebläsekasten 180 auf, der an seiner Unterseite eine quer über den Bereich, in dem der Überziehvorgang stattfindet, verlaufende Austrittsdüse 182 aufweist. Über diese Austrittsdüse 182 kann auf die auf dem Förderband 66 liegenden Produkte quer über das Förderband 66 ein konzentrierter Warmluftstrom mit einer gewünschten Strömungsgeschwindigkeit appliziert werden, über den ein auf die Produkte aufgetragener Überzug aus noch fließfähiger Überzugmasse berührungsfrei egalisiert und kalibriert, d.h. vergleichmäßigt und in seiner Dicke eingestellt, werden kann. Die Egalisier- und Kalibrierwirkung lässt sich dadurch erreichen, dass einerseits der Abstand der Austrittsdüse 182 zum Förderband 66 und andererseits die Strömungsgeschwindigkeit des applizierten Warmluftstroms eingestellt werden.

In den Figuren 2 und 3 erkennt man am Auslaufende 14 eine Entschwänzwellenanordnung 184 mit einer rotierenden Entschwänzwelle 186, die in einer beheizten Prismenführung 188 drehbar geführt ist. Sie wird über zwei zusätzliche Halter 189 seitlich stabilisiert. Die Entschwänzwelle 186 dient dazu, am Boden der überzogenen Produkte durch Abtropfen nach unten vorstehende und bereits teilweise erstarrte Tropfen oder Nasen aus Überzugmasse abzustreifen. Auch die gesamte Entschwänzwellenanordnung 184 lässt sich seitlich zu Reinigungs- und Wartungszwecken aus der Überziehvorrichtung 18 entnehmen.

In Figur 5 erkennt man den Band-Aufgabetisch 16, der, wie in Figur 1 gezeigt, an der Einlaufseite 12 angeordnet ist. Dieser dient dazu, die Produkte, die mit Überzugmasse zu überziehen sind, der Überziehvorrichtung 18 zuzuführen. Der Band-Aufgabetisch 16 ist mit einem Gestell 190 aus Edelstahl ausgeführt und verschiebbar auf Rollen 192 angeordnet. An seiner Oberseite weist der Band-Aufgabetisch 16 Seitenwände 194, 196 aus Edelstahl auf, an denen außerhalb bzw. außenliegend Lagerelemente über Abstandselemente zur Verbesserung der Reinigungsmöglichkeit angeordnet sind. Die Seitenwände 194, 196 dienen dazu, Lagerwalzen sowie Steuer- und Spannelemente und Antriebswalzen, von denen exemplarisch die Walze 198 gezeigt ist, zu lagern. Auch diese Komponenten sind aus Edelstahl ausgeführt und dicht verschweißt.

Figur 6 zeigt den optionalen Komponentenschrank 24, zur Unterbringung von Versorgungskomponenten. Im Beispielsfall ist in den Komponentenschrank 24 die Warmluftversorgung mit einem Ventilator und einem Filter untergebracht. Die Ansicht lässt einen saugseitig des Ventilators angebrachten Filter 200, über den Luft aus dem Produktraum angesaugt und gereinigt wird, sowie ein Versorgungsrohr 202 erkennen, das mit der Gebläsestation 174 zur Versorgung mit Warmluft über eine geeignete Rohrleitung verbunden bzw. verbindbar ist. Der Komponentenschrank 24 ist aus Edelstahl mit einem geneigten Dach 204 ausgebildet.

In Figur 7 erkennt man die Bodenüberziehstation 96 in Einzeiteildarstellung. Diese ist als Ganzes seitlich, d.h. quer zur Förderrichtung gemäß Pfeil P, aus der Überziehvorrichtung 18 herausziehbar. Dies macht es möglich, zu Wartungs- und Reinigungszwecken die Bodenüberziehstation 96 als Ganzes aus der Überziehvorrichtung 18 herauszunehmen und sie so separat außerhalb der Überziehvorrichtung 18 einer Reinigung zu unterziehen, bei der sie weiter zerlegt werden kann. Die Bodenüberziehstation 96 ist wiederum mit Rahmenelementen 210, 212 aus Edelstahl ausgeführt. Man erkennt in der Darstellung gemäß Figur 7, dass eine Walze 214 und ein Schieber 218 in den beiden seitlichen Rahmenelementen 210 über Einschubleisten 220, 222 gelagert sind. Diese Einschubleisten 220, 222 sind in entsprechende Ausnehmungen in den seitlichen Rahmenelementen 210 von oben eingeschoben und Umgreifen den Rand der Ausnehmungen mit Aufnahmenuten 224. Diese Konstruktion erlaubt es, die über die Einschubleisten 220, 222 gelagerte Walzen 214 und den Schieber 218 zur Reinigung oder zu Wartungszwecken einfach nach oben abzuziehen, ohne zusätzliches Werkzeug verwenden zu müssen. Darüber hinaus sind hierfür keine besonderen Befestigungsmittel, wie etwa Schrauben erforderlich, die den Nachteil schmutzhaltender Fügekanten mit sich bringen. Auch die Einschubleisten 220, 222 sind in Edelstahl bzw. Kunststoff ausgeführt. Über eine spiralförmige Steuerkurve in einer Steuerscheibe 226 lässt sich die Position des Schiebers 218 einstellen, um so einen Bodenwall aus Überzugmasse einstellen zu können, der für den Bodenüberzug maßgeblich ist.

Mit der erfindungsgemäßen System 10 lassen sich Produkte in an sich bekannter vielfältiger Weise mit einem Überzug aus Überzugmasse, beispielsweise aus Schokolade oder einer Zuckermasse überziehen. Die Vorrichtung eignet sich auch für eine sehr breite Ausführung mit einem breiten Förderband 66 zum Erreichen hoher Ausstoßmengen. Sie kann variabel gestaltet werden, indem beispielsweise eine oder mehrere Bodenüberziehstationen 96 und eine oder mehrere Schleierüberziehstationen 84 separat voneinander angeordnet oder in Kombination miteinander zur Durchführung verschiedener Überziehaufgaben kombiniert werden.

Im Folgenden wird ein zweites Ausführungsbeispiels der Erfindung beschrieben. Gleichartige und gleichwirkende Merkmale werden mit denselben Bezugszeichen versehen, jedoch mit der Ziffer "3" vorangestellt.

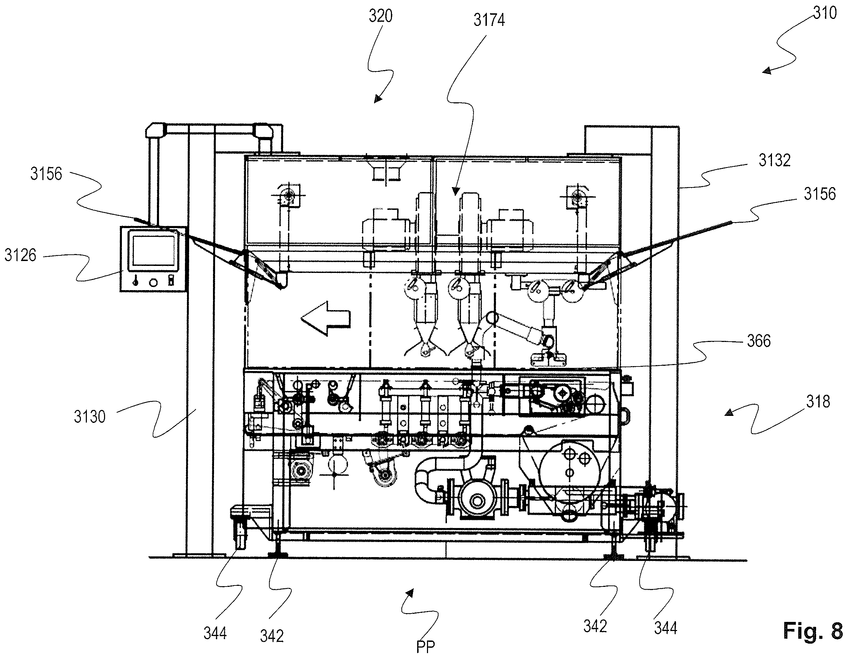

Fig. 8 zeigt eine teilweise aufgebrochene Vorderansicht des Systems 310 gemäß dem zweiten Ausführungsbeispiel der Erfindung.

Das System 310 umfasst eine Dachanordnung 320 und eine Überziehvorrichtung 318. Die Überziehvorrichtung 318 befindet sich in Fig. 8 in der Produktionsposition PP, wobei die Dachanordnung 320 die Produktionsposition PP definiert.

An der Dachanordnung 320 ist die Steuerung 3126 angebracht. Die Dachanordnung 320 weist vier Säulen bzw. Stützen 3130 und 3132 auf (in Fig.8 nur 2 gezeigt), die eine Stützeinrichtung für die Dachanordnung 320 bilden. Zudem sind in Figur 8 die Klappen 3156 an der Dachanordnung 320 erkennbar, die im aufgeklappten Zustand dargestellt sind. Die Dachanordnung 320 umfasst auch bei diesem Ausführungsbeispiel eine Gebläsestation 3174, die auf ein Förderband 366 der Überziehvorrichtung 318 gerichtet ist. An der Überziehvorrichtung 318 sind Rollen 340 und Lagerfüße 342 erkennbar. In der Produktionsposition PP lässt sich die Überziehvorrichtung 318 über die in ihrer Höhe einstellbaren Lagerfüße 342 stabilisieren.

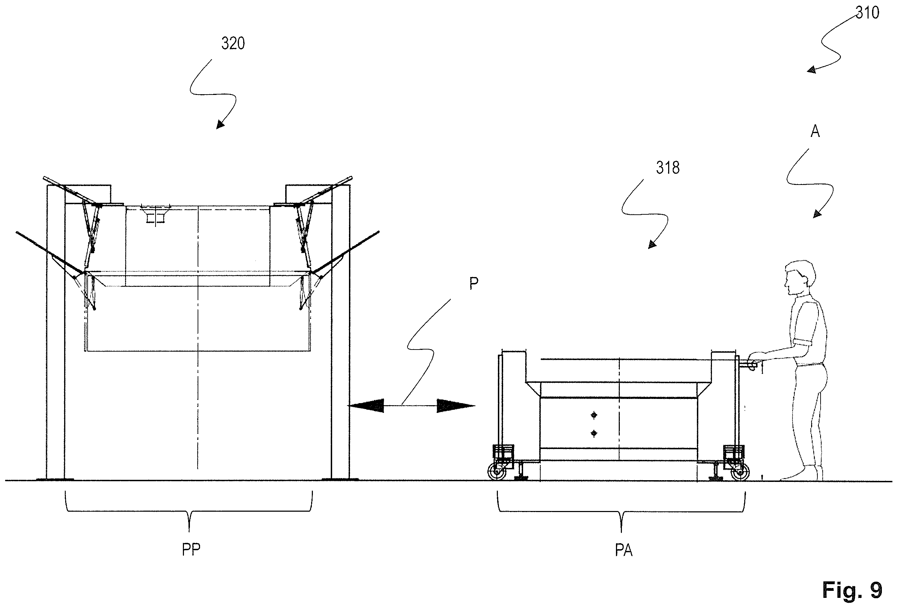

Fig. 9 zeigt das System 310 mit der Dachanordnung 320 und der Überziehvorrichtung 318 in der ihr zugeordneten Parkposition PA. Die Überziehvorrichtung 318 befindet sich demnach nicht in der Produktionsposition PP unter der Dachanordnung 320.

Gemäß Fig. 9 wird die Überziehvorrichtung 318 von einem Arbeiter A aus ihrer Parkposition PA in Richtung des Pfeils P zur Produktionsposition PP unterhalb der Dachanordnung 320 hin verlagert. Die Dachanordnung 320 definiert die Produktionsposition PP.

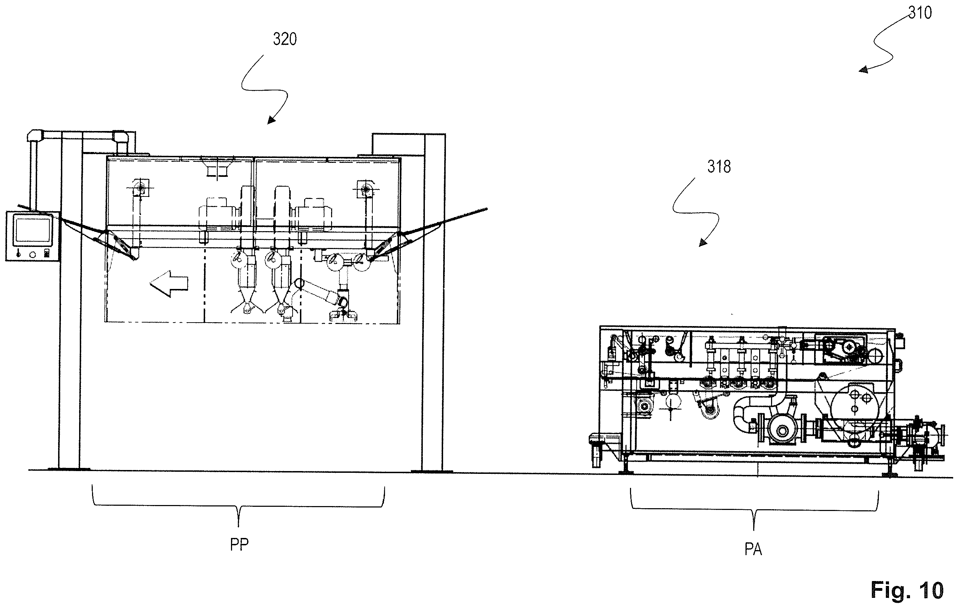

Fig. 10 zeigt die Ansicht der Dachanordnung 320 und der Überziehvorrichtung 318 gemäß Fig. 8, jedoch befindet sich die Überziehvorrichtung 318 gemäß Fig. 10 in der Parkposition PA.

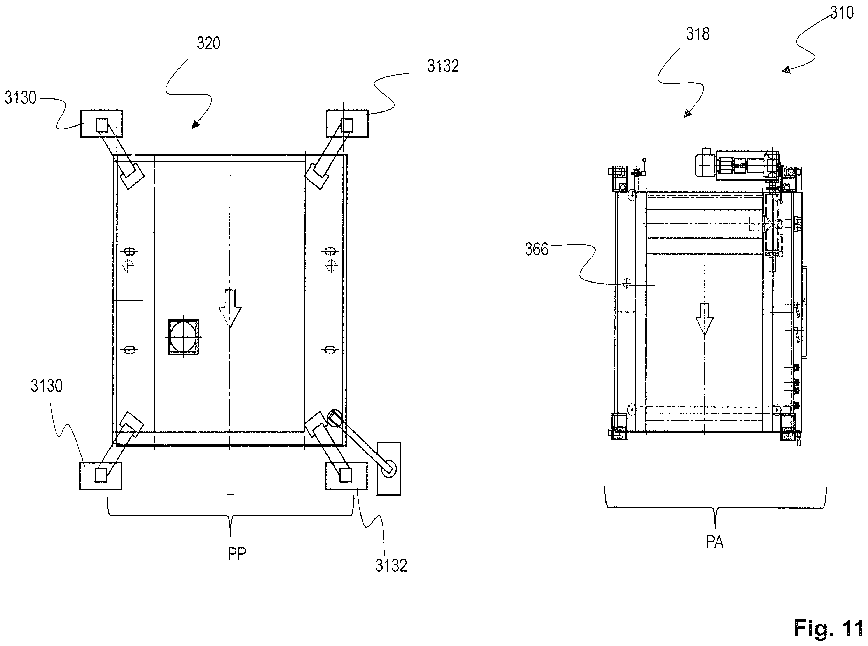

Fig. 11 zeigt eine Draufsicht des Systems 310.

In Fig. 11 ist das Förderband 366 der Überziehvorrichtung 318 erkennbar. Die Überziehvorrichtung 318 befindet sich in der Parkposition PA.

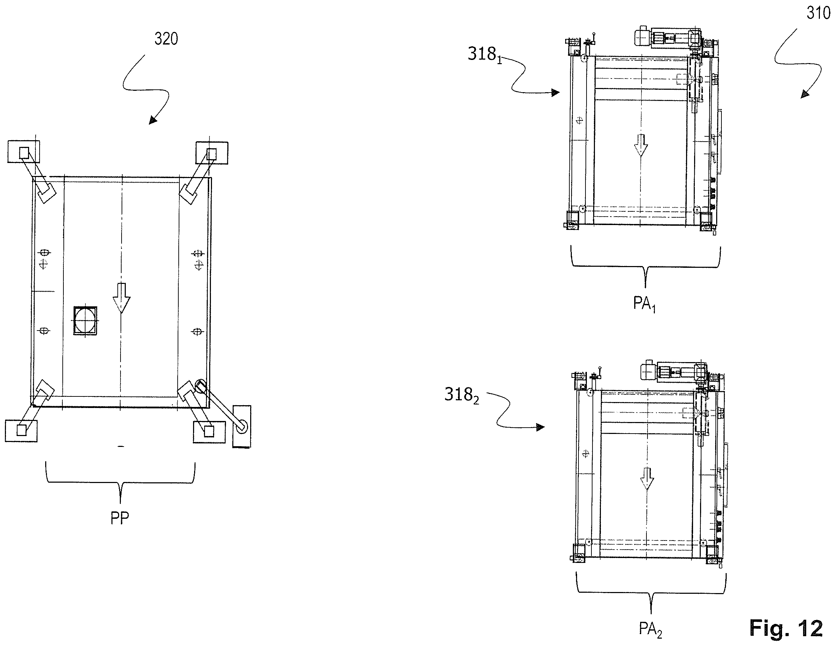

Fig. 12 zeigt eine Draufsicht des Systems 310, in der neben der ersten Überziehvorrichtung 318₁ auch die zweite Überziehvorrichtung 318₂ gezeigt ist. Die erste und die zweite Überziehvorrichtung 318₁, 318₂ befinden sich jeweils in der Ihnen zugeordneten Parkposition PA₁, PA₂.

Zur Produktion wird entweder die erste Überziehvorrichtung 318₁ oder die zweite Überziehvorrichtung 318₂ aus ihrer jeweiligen Parkposition PA₁ und PA₂ in die Produktionsposition PP verlagert.

Bei einem Wechsel der Überzugsmasse wird die sich in der Produktionsposition PP befindende erste oder zweite Überziehvorrichtung 318₁, 318₂ in die ihr zugeordnete Parkposition PA₁ oder PA₂ verlagert. Im Anschluss daran wird die jeweils andere erste oder zweite Überziehvorrichtung 318₁, 318₂ aus ihrer Parkposition PA₁ oder PA₂ in die Produktionsposition PP verlagert.

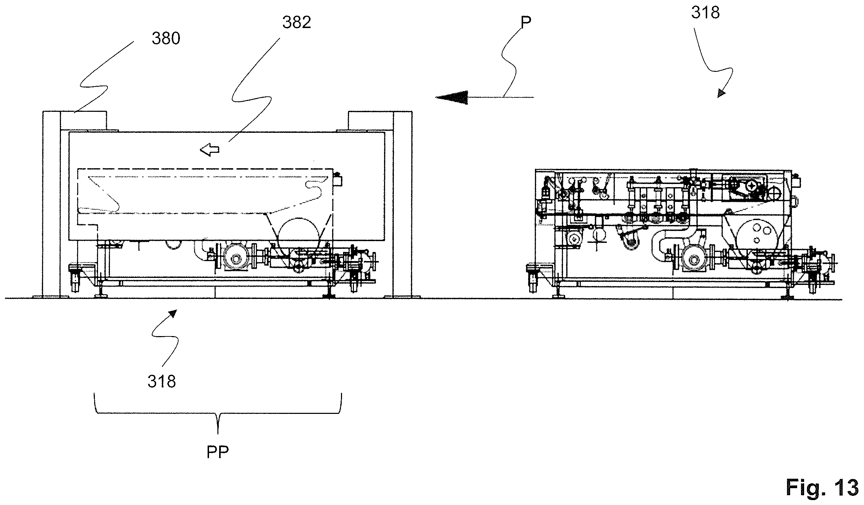

Fig. 13 zeigt eine Ansicht einer Parkeinrichtung 380 mit darin aufgenommener Überziehvorrichtung 318.

Die Überziehvorrichtung 318 kann in der Richtung des Pfeils P in die Parkeinrichtung 380 verlagert werden.

Die Überziehvorrichtung 318 befindet sich in der Parkposition PA, die hier von der Parkeinrichtung 380 definiert wird. Die Parkeinrichtung 380 weist eine Abdeckung 382 und Anschlussmittel (nicht gezeigt) auf, die zur Kopplung der Überziehvorrichtung 318 mit der Parkeinrichtung 380 dienen. Die Abdeckung 382 dient als Wärmedämmung für die Überziehvorrichtung 318, um die Überziehvorrichtung 318 auf einer vorbestimmten Temperatur halten zu können, so dass die Überziehvorrichtung 318 nach ihrer Verlagerung in die Produktionsposition PP sofort einsatzfähig ist. Ferner verhindert die Parkeinrichtung 318 eine Kontaminierung der Überziehvorrichtung 318

Eine derartige Parkeinrichtung 318 kann in jeder Parkposition PA₁ oder PA₂ vorgesehen sein (Fig. 12).

## Patentansprüche

1. System (10; 310) zum Überziehen von Produkten, insbesondere Lebensmittelprodukten, mit unterschiedlichen fließfähigen Überzugsmassen, mit:
- wenigstens einer ersten Überziehvorrichtung (18; 318₁) mit einem Aufnahmemittel zur Aufnahme einer ersten Überzugsmasse, wobei das Aufnahmemittel zur Aufnahme der Überzugsmasse der wenigstens einen ersten Überziehvorrichtung (18; 318₁) eine beheizbare Massewanne (106) ist, und wobei die wenigstens eine erste Überziehvorrichtung (18; 318₁) ein Förderband (66; 366) aufweist,
- wenigstens einer zweiten Überziehvorrichtung (18; 318₂) mit einem Aufnahmemittel zur Aufnahme einer zweiten Überzugsmasse, wobei das Aufnahmemittel zur Aufnahme der Überzugsmasse der wenigstens einen zweiten Überziehvorrichtung eine beheizbare Massewanne (106) ist, und wobei die wenigstens eine zweite Überziehvorrichtung (18; 318₂) ein Förderband (66; 366) aufweist, und
- einer Dachanordnung (20; 320), die eine Produktionsposition (PP) definiert,
wobei die wenigstens eine erste Überziehvorrichtung (18; 318₁) und die wenigstens eine zweite Überziehvorrichtung (18; 318₂) der Dachanordnung (20; 320) zugeordnet sind, und wobei die wenigstens eine erste Überziehvorrichtung (18; 318₁) und die wenigstens eine zweite Überziehvorrichtung (18; 318₂) wechselweise in eine Produktionsposition (PP) verlagerbar und in der Produktionsposition (PP) jeweils mit der Dachanordnung (20; 320) koppelbar sind.

2. System (10; 310) nach Anspruch 1,
wobei die wenigstens eine erste Überziehvorrichtung (18; 318₁) und die wenigstens eine zweite Überziehvorrichtung (18; 318₂) zwischen der Produktionsposition (PP) und wenigstens einer Parkposition (PA) verlagerbar sind.

3. System (10; 310) nach Anspruch 2,
wobei der ersten Überziehvorrichtung (18; 318₁) und der zweiten Überziehvorrichtung (18; 318₂) jeweils wenigstens eine Parkposition (PA₁, PA₂) zugeordnet ist.

4. System (10; 310) nach einem der Ansprüche 1 bis 3,
wobei die wenigstens eine erste Überziehvorrichtung (18; 318₁) oder die wenigstens eine zweite Überziehvorrichtung (18; 318₂) in der Produktionsposition (PP) unterhalb der Dachanordnung (20; 220) angeordnet sind.

5. System (310) nach Anspruch 2 bis 4,
wobei das System (310) eine Parkeinrichtung (380) zur Aufnahme der sich nicht in der Produktionsposition (PP) befindenden wenigstens einen ersten Überziehvorrichtung (318₁) oder wenigstens einen zweiten Überziehvorrichtung (318₂) umfasst, wobei die Parkeinrichtung (380) die wenigstens eine Parkposition (PA) definiert.

6. System (10; 310) nach Anspruch 5,
wobei die wenigstens eine erste Überziehvorrichtung (18; 318₁) oder die wenigstens eine zweite Überziehvorrichtung (18; 318₂) in der Parkeinrichtung (380) beheizbar ist, oder die Parkeinrichtung (380) beheizbar ist.

7. System (310) nach Anspruch 5 oder 6,
wobei die Parkeinrichtung (380) eine Abdeckung für die sich in der Parkposition (PA) befindende wenigstens eine erste Überziehvorrichtung (18; 318₁) oder wenigstens eine zweite Überziehvorrichtung (18; 318₂) aufweist.

8. System (10; 310) nach einem der Ansprüche 1 bis 7,
wobei die Dachanordnung (20; 320) wenigstens eine Gebläsestation (174; 374) und/oder eine Steuerung (26; 326) aufweist.

9. System (10; 310) nach Anspruch 8,
wobei die Gebläsestation (174; 374) der Dachanordnung (20; 320) auf das Förderband (66; 366) der sich in der Produktionsposition (PP) befindenden wenigstens einen ersten Überziehvorrichtung (18; 318₁) oder wenigstens einen zweiten Überziehvorrichtung (18; 318₂) gerichtet ist.

10. System (10; 310) nach einem der Ansprüche 1 bis 9,
wobei die wenigstens eine erste Überziehvorrichtung (18; 318₁) und die wenigstens eine zweite Überziehvorrichtung (18; 318₂) jeweils wenigstens eine Heizeinrichtung aufweisen.

11. System (10; 310) nach einem der Ansprüche 1 bis 10,
wobei die Massewanne (106) über ein Leitungssystem mit einer Überziehstation (84, 96) der wenigstens einen ersten Überziehvorrichtung (18; 318₁) oder der wenigstens einen zweiten Überziehvorrichtung (18; 318₂) verbunden ist.

12. System (10; 310) nach einem der Ansprüche 1 bis 11,
wobei das System (10; 310) wenigstens ein Positionierungsmittel aufweist, das eine exakte Positionierung der wenigstens einen ersten Überziehvorrichtung (18; 318₁) oder der wenigstens einen zweiten Überziehvorrichtung (18; 318₂) in der Produktionsposition (PP) sicherstellt.

13. Verfahren zum Überziehen von Produkten, insbesondere Lebensmittelprodukten, mit unterschiedlichen fließfähigen Überzugsmassen mit den Schritten von:
- Bereitstellen einer ersten Überziehvorrichtung (18; 318₁) mit einem Aufnahmemittel zur Aufnahme einer ersten Überzugsmasse, wobei das Aufnahmemittel zur Aufnahme der Überzugsmasse der wenigstens einen ersten Überziehvorrichtung (18; 318₁) eine beheizbare Massewanne (106) ist, und wobei die wenigstens eine erste Überziehvorrichtung (18; 318₁) ein Förderband (66; 366) aufweist,
- Bereitstellen einer zweiten Überziehvorrichtung (18; 318₂) mit einem Aufnahmemittel zur Aufnahme einer zweiten Überzugsmasse, wobei das Aufnahmemittel zur Aufnahme der Überzugsmasse der wenigstens einen zweiten Überziehvorrichtung eine beheizbare Massewanne (106) ist, und wobei die wenigstens eine zweite Überziehvorrichtung (18; 318₂) ein Förderband (66; 366) aufweist,
- wechselweises Verlagern der ersten Überziehvorrichtung oder zweiten Überziehvorrichtung in eine Produktionsposition,
- Koppeln der sich in der Produktionsposition befindenden ersten Überziehvorrichtung (18; 318₁) oder zweiten Überziehvorrichtung (18; 318₂) mit einer Dachanordnung.

14. Verfahren nach Anspruch 13,
wobei der Schritt von wechselweisen Verlagern der ersten Überziehvorrichtung (18; 318₁) oder zweiten Überziehvorrichtung (18; 318₂) in eine Produktionsposition den Schritt umfasst von:
- Verlagern der ersten (18; 318₁) oder der zweiten Überziehvorrichtung (18; 318₂) aus einer Parkposition in die Produktionsposition,
- Verlagern der ersten (18; 318₁) oder der zweiten Überziehvorrichtung(18; 318₂) aus der Produktionsposition in die Parkposition,
- Verlagern der jeweils anderen ersten (18; 318₁) oder zweiten Überziehvorrichtung (18; 318₂) von der Parkposition (PA₁; PA₂) in die Produktionsposition (PP).

15. Verfahren nach Anspruch 14,
mit dem Schritt von:
- Koppeln und Abdecken der sich in der Parkposition (PA₁; PA₂) befindenden ersten (18; 318₁) oder zweiten Überziehvorrichtung (18; 318₂) mit einer Parkeinrichtung (380).

## Claims

1. A system (10; 310) for coating products, in particular food products, with various fluid coating materials, with:
- at least one first coating device (18; 318₁) with a receptacle for containing a first coating material, said receptacle for containing the coating material of the at least one first coating device (18; 318₁) being embodied as a heatable coating material vat (106) and said at least one first coating device (18; 318₁) being equipped with a conveyor belt (66; 366),
- at least one second coating device (18; 318₂) with a receptacle for containing a second coating material, said receptacle for containing the coating material of the at least one second coating device being embodied as a heatable coating material vat (106) and said at least one second coating device (18; 318₂) being equipped with a conveyor belt (66; 366), and
- a roof device (20; 320), which defines a production position (PP),
wherein the at least one first coating device (18; 318₁) and the at least one second coating device (18; 318₂) are associated with the roof device (20; 320); and the at least one first coating device (18; 318₁) and the at least one second coating device (18; 318₂) can be alternatingly moved into a production position (PP) and in the production position (PP), can each be respectively coupled to the roof device (20; 320).

2. The system (10; 310) according to claim 1,
wherein the at least one first coating device (18; 318₁) and the at least one second coating device (18; 318₂) can be moved between the production position (PP) and at least one parked position (PA).

3. The system (10; 310) according to claim 2,
wherein the first coating device (18; 318₁) and the second coating device (18; 318₂) are each associated with at least one respective parked position (PA₁; PA₂).

4. The system (10; 310) according to one of claims 1 through 3,
wherein the at least one first coating device (18; 318₁) or the at least one second coating device (18; 318₂) are positioned under the roof device (20; 320) in the production position (PP).

5. The system (310) according to claims 2 through 4,
wherein the system (310) includes a parking device (380) for accommodating the at least one first coating device (318₁) or the at least one second coating device (318₂) that is not in the production positon (PP), said parking device (380) defining the at least one parked position (PA).

6. The system (10; 310) according to claim 5,
wherein the at least one first coating device (18; 318₁) or the at least one second coating device (18; 318₂) can be heated in the parking device (380) or the parking device (380) can be heated.

7. The system (10; 310) according to claim 5 or 6,
wherein the parking device (380) has a cover for the at least one first coating device (18; 318₁) or the at least one second coating device (18; 318₂), which is in the parked position (PA).

8. The system (10; 310) according to one of claims 1 through 7,
wherein the roof device (20; 320) has at least one blower station (174; 374) and/or a control unit (26; 326).

9. The system (10; 310) according to claim 8,
wherein the blower station (174; 374) of the roof device (20; 320) is directed at the conveyor belt (66; 366) of the at least one first coating device (18; 318₁) or the at least one second coating device (18; 318₂), which is in the production position (PP).

10. The system (10; 310) according to one of claims 1 through 9,
wherein the at least one first coating device (18; 318₁) and the at least one second coating device (18; 318₂) each have at least one heating device.

11. The system (10; 310) according to one of claims 1 through 10,
wherein the coating material vat (106) is connected via a line system to a coating station (84, 96) of the at least one first coating device (18; 318₁) or the at least one second coating device (18; 318₂).

12. The system (10; 310) according to one of claims 1 through 11,
wherein the system (10; 310) has at least one positioning means that assures an exact positioning of the at least one first coating device (18; 318₁) or the at least one second coating device (18; 318₂) in the production position (PP).

13. A method for coating products, in particular food products, with various fluid coating materials, with the steps of:
- provision of a first coating device (18; 318₁) with a receptacle for containing a first coating material, said receptacle for containing the coating material of the coating material of the at least one first coating device (18; 318₁) being embodied as a heatable coating material vat (106) and said at least one first coating device (18; 318₁) being equipped with a conveyor belt (66; 366),
- provision of a second coating device (18; 318₂) with a receptacle for containing a second coating material, said receptacle for containing the at least one second coating device being embodied as a heatable coating material vat (106) and said at least one second coating device (18; 318₂) being equipped with a conveyor belt (66; 366),
- alternating movement of the first coating device or second coating device into a production position,
- coupling of the first coating device (18; 318₁) or second coating device (18; 318₂) that is in the production position to a roof device.

14. The method according to claim 13,
wherein the step of alternating movement of the first coating device (18; 318₁) or second coating device (18; 318₂) into a production position includes the step of:
- movement of the first coating device (18; 318₁) or second coating device (18; 318₂) from a parked position into the production position,
- movement of the first coating device (18; 318₁) or second coating device (18; 318₂) from the production position into the parked position,
- movement of the respective other coating device (18; 318₁) or second coating device (18; 318₂) from the parked position (PA₁; PA₂) into the production position (PP).

15. The method according to claim 14,
with the step of:
- coupling and covering the first coating device (18; 318₁) or second coating device (18; 318₂) that is in the parked position (PA₁; PA₂) by means of a parking device (380).

## Revendications

1. Système (10 ; 310) pour enrober des produits, en particulier des produits alimentaires, avec différentes matières d'enrobage coulantes, comprenant :
- au moins un premier dispositif d'enrobage (18 ; 318₁) doté d'un moyen de réception destiné à recevoir une première matière d'enrobage, le moyen de réception destiné à recevoir la matière d'enrobage dudit au moins un premier dispositif d'enrobage (18 ; 318₁) étant une cuve de matière chauffante (106), et ledit au moins un premier dispositif d'enrobage (18 ; 318₁) comprenant une bande transporteuse (66 ; 366),
- au moins un deuxième dispositif d'enrobage (18 ; 318₂) doté d'un moyen de réception destiné à recevoir une deuxième matière d'enrobage, le moyen de réception destiné à recevoir la matière d'enrobage dudit au moins un deuxième dispositif d'enrobage (18 ; 318₂) étant une cuve de matière chauffante (106), et ledit au moins un deuxième dispositif d'enrobage (18 ; 318₂) comprenant une bande transporteuse (66 ; 366), et
- un ensemble formant toit (20 ; 320) qui définit une position de production (PP),
dans lequel ledit au moins un premier dispositif d'enrobage (18 ; 318₁) et ledit au moins un deuxième dispositif d'enrobage (18 ; 318₂) sont associés à l'ensemble formant toit (20 ; 320), et dans lequel ledit au moins un premier dispositif d'enrobage (18 ; 318₁) et ledit au moins un deuxième dispositif d'enrobage (18 ; 318₂) sont aptes à être déplacés en alternance dans une position de production (PP) et à être accouplés respectivement, dans la position de production (PP), à l'ensemble formant toit (20 ; 320).

2. Système (10 ; 310) selon la revendication 1,
dans lequel ledit au moins un premier dispositif d'enrobage (18 ; 318₁) et ledit au moins un deuxième dispositif d'enrobage (18 ; 318₂) sont aptes à être déplacés entre la position de production (PP) et au moins une position de parcage (PA).

3. Système (10 ; 310) selon la revendication 2,
dans lequel au moins une position de parcage (PA₁, PA₂) est associée respectivement au premier dispositif d'enrobage (18 ; 318₁) et au deuxième dispositif d'enrobage (18 ; 318₂).

4. Système (10 ; 310) selon l'une des revendications 1 à 3,
dans lequel ledit au moins un premier dispositif d'enrobage (18 ; 318₁) ou ledit au moins un deuxième dispositif d'enrobage (18 ; 318₂) sont disposés sous l'ensemble formant toit (20 ; 220) dans la position de production (PP).

5. Système (310) selon les revendications 2 à 4,
dans lequel le système (310) comprend un dispositif de parcage (380) destiné à recevoir ledit au moins un premier dispositif d'enrobage (318₁) ou ledit au moins un deuxième dispositif d'enrobage (318₂) qui ne se trouve pas dans la position de production (PP), le dispositif de parcage (380) définissant ladite au moins une position de parcage (PA).

6. Système (10 ; 310) selon la revendication 5,
dans lequel ledit au moins un premier dispositif d'enrobage (18 ; 318₁) ou ledit au moins un deuxième dispositif d'enrobage (18 ; 318₂) est apte à être chauffé dans le dispositif de parcage (380), ou le dispositif de parcage (380) est apte à être chauffé.

7. Système (310) selon la revendication 5 ou 6,
dans lequel le dispositif de parcage (380) comprend un couvercle pour ledit au moins un premier dispositif d'enrobage (18 ; 318₁) ou ledit au moins un deuxième dispositif d'enrobage (18 ; 318₂) qui se trouve dans la position de parcage (PA).

8. Système (10 ; 310) selon l'une des revendications 1 à 7,
dans lequel l'ensemble formant toit (20 ; 320) comprend au moins un poste de soufflerie (174 ; 374) et/ou une commande (26 ; 326).

9. Système (10 ; 310) selon la revendication 8,
dans lequel le poste de soufflerie (174 ; 374) de l'ensemble formant toit (20 ; 320) est dirigé sur la bande transporteuse (66 ; 366) dudit au moins un premier dispositif d'enrobage (18 ; 318₁) ou dudit au moins un deuxième dispositif d'enrobage (18 ; 318₂) qui se trouve dans la position de production (PP).

10. Système (10 ; 310) selon l'une des revendications 1 à 9,
dans lequel ledit au moins un premier dispositif d'enrobage (18 ; 318₁) et ledit au moins un deuxième dispositif d'enrobage (18 ; 318₂) présentent chacun au moins un dispositif de chauffage.

11. Système (10 ; 310) selon l'une des revendications 1 à 10,
dans lequel la cuve de matière (106) est reliée moyennant un système de conduites à un poste d'enrobage (84, 96) dudit au moins un premier dispositif d'enrobage (18 ; 318₁) ou dudit au moins un deuxième dispositif d'enrobage (18 ; 318₂).

12. Système (10 ; 310) selon l'une des revendications 1 à 11,
dans lequel le système (10 ; 310) comprend au moins un moyen de positionnement qui assure un positionnement exact dudit au moins un premier dispositif d'enrobage (18 ; 318₁) ou dudit au moins un deuxième dispositif d'enrobage (18 ; 318₂) dans la position de production (PP).

13. Procédé pour enrober des produits, en particulier des produits alimentaires, avec différentes matières d'enrobage coulantes, comprenant les étapes consistant à :
- fournir un premier dispositif d'enrobage (18 ; 318₁) doté d'un moyen de réception destiné à recevoir une première matière d'enrobage, le moyen de réception destiné à recevoir la matière d'enrobage dudit au moins un premier dispositif d'enrobage (18 ; 318₁) étant une cuve de matière chauffante (106), et ledit au moins un premier dispositif d'enrobage (18 ; 318₁) comprenant une bande transporteuse (66 ; 366),
- fournir un deuxième dispositif d'enrobage (18 ; 318₂) doté d'un moyen de réception destiné à recevoir une deuxième matière d'enrobage, le moyen de réception destiné à recevoir la matière d'enrobage dudit au moins un deuxième dispositif d'enrobage (18 ; 318₂) étant une cuve de matière chauffante (106), et ledit au moins un deuxième dispositif d'enrobage (18 ; 318₂) comprenant une bande transporteuse (66 ; 366),
- déplacer en alternance le premier dispositif d'enrobage ou le deuxième dispositif d'enrobage dans une position de production,
- accoupler le premier dispositif d'enrobage (18 ; 318₁) ou le deuxième dispositif d'enrobage (18 ; 318₂) qui se trouve dans la position de production à un ensemble formant toit.

14. Procédé selon la revendication 13,
dans lequel l'étape consistant à déplacer en alternance le premier dispositif d'enrobage (18 ; 318₁) ou le deuxième dispositif d'enrobage (18 ; 318₂) dans une position de production comprend les étapes consistant à :
- déplacer le premier (18 ; 318₁) ou le deuxième dispositif d'enrobage (18 ; 318₂) depuis une position de parcage dans la position de production,
- déplacer le premier (18 ; 318₁) ou le deuxième dispositif d'enrobage (18 ; 318₂) depuis la position de production dans la position de parcage,
- déplacer l'autre premier (18 ; 318₁) ou deuxième dispositif d'enrobage (18 ; 318₂) respectif depuis la position de parcage (PA₁ ; PA₂) dans la position de production (PP).

15. Procédé selon la revendication 14,
comprenant l'étape consistant à :
- accoupler et recouvrir le premier (18 ; 318₁) ou deuxième dispositif d'enrobage (18 ; 318₂) qui se trouve dans la position de parcage (PA₁ ; PA₂) à un dispositif de parcage (380).
